# EUROPEAN PATENT SPECIFICATION

(11) **EP 2 492 571 B1**
(45) Date of publication and mention of the grant of the patent: **25.09.2019**
(21) Application number: 12156371.2
(22) Date of filing: 21.02.2012
(51) Int. Cl.: F16L 33/01, E21B 17/08

(54) **End fitting for a riser and method**
Verschraubung für eine Steigleitung und Verfahren
Raccord d'extrémité de colonne de montée et procédé

(30) Priority: 22.02.2011 BR 11001488
(43) Date of publication of application: 29.08.2012
(73) Proprietor: Petroleo Brasileiro S.A. - PETROBRAS, Rio de Janeiro (BR)
(72) Inventor: CAMPELLO, George Carneiro, Botafogo, Rio de Janeiro RJ 22251-040 (BR); DE ALMEIDA, Marcos Carpigiani, 22410-040 Rio de Janeiro RJ (BR)
(74) Representative: J A Kemp

(56) References cited:
- GB-A- 2 156 031
- GB-A- 2 439 146
- JP-A- H05 231 576
- US-A1- 2009 160 184
- US-A1- 2009 322 077

## Description

### FIELD OF THE INVENTION

The present invention relates to an end fitting for a riser. More particularly the end fitting may be for flexible risers. In an embodiment the device may enable the assembly procedure to be carried out with substantially no need to bend the tensile armour. An assembly procedure according to an embodiment of the present invention may reduce or eliminate the residual tensions produced due to plastic deformation of the tensile armour and also the modifications in microstructural properties of the steel, imposed by prior art end fittings and their respective assembly techniques.

### BACKGROUND OF THE INVENTION

In offshore production systems, crude oil produced in wells on the ocean floor is conveyed to a stationary production unit (SPU) by means of pipelines. These pipelines of electro-hydraulic umbilicals for injecting water and for pumping oil and gas are commonly referred to as collection and production lines.

This set of pipelines constituting the collection and production lines is basically subdivided into two distinct parts:
- The first portion, preponderantly horizontal, denominated: the horizontal segment. This portion is conventionally static and also specifically known in the technical terminology as "flowline".
- The second portion, constituted by a preponderantly vertical pipe connected to the extremity of the horizontal segment and which ascends from the sea floor to the platform whereat it is connected, denominated: the vertical segment. The second portion is also known, and hereinafter denominated, by the technical terminology of "riser".

The term vertical as used here should not be interpreted in the strict sense, since the distance between the platform and the point of connection to the "flowline", together with the weight of the riser itself, means that this stretch has to take a substantially curved shape known as catenary.

There are basically two types of riser on the market: rigid and flexible, which are fixed to a platform by means of supporting structures specially designed to support and to resist the stresses applied therein, which can be due to the weight thereof as well as movement thereof due to ocean currents, for example.

Like the supporting structures, the end fitting must also be designed to support and to resist the stress from weight and movement of the riser.One problem in the prior art is that a riser is sensitive to the various different stresses to which they are submitted. Flexible risers, due to their construction, are even more sensitive than rigid risers to the various different stresses to which they are submitted.

A flexible riser may formed by superimposing, for example, at least six interdependent layers with totally different compositions: the first, innermost layer is the inner casing, followed by a polymeric pressure layer. These are followed by the pressure armour, the inner layer of tensile armour, and the outer layer of tensile armour, comprising braided steel wire. All of the foregoing are further covered with an outer polymer layer.

In the prior art, to fix the upper end of a riser such as a flexible riser to the corresponding support in the SPU, the end of the riser can be fixed to a device, which serves as the engaging and supporting means between the riser as such and the support. This device is known in the art as the "end fitting".

This results in a situation in which the stresses due to the weight and movement of a riser are concentrated in a single region. This region is represented by three components of a collection and production line, namely: the support, the end fitting and the free end of the flexible riser.

The three components interact differently with each other. While the support shows restricted freedom of movement with respect to the corresponding end fitting, the end fitting itself can only interact in a fixed manner with respect to the six components that form the flexible riser.

As regards this aspect of fixing, the end fittings are designed and manufactured so as to offer the best means for uniting the components for supporting the flexible riser and at the same time they also offer reliable means for hydraulic insulation as regards the inner polymeric pressure layer. In the prior art, this union is basically obtained as follows:
- First the inner and outer layers of the tensile armour, which are made of steel and confer axial strength to resist the tensile stresses to which the flexible riser is submitted, are exposed.
- In order to achieve transfer of the tensile stresses from the riser to the end fitting, and then to the support on the platform, adhesion of the wire of the tensile armour is promoted by a resin in a section inside the end fitting. This adhesion is carried out inside the end fitting, in the vicinity of the opening, known in the art as the wedge region or canula.

This is a critical region due to the change of geometry imposed on the steel wire of tensile armour. The current assembly procedure used to bend the wire in the opening region of the end fitting requires the plastic deformation of the tensile armour.

According to the practice currently adopted, the internal sealing and anchoring of the armour are carried out in the same region of the end fitting, which necessarily entails bending of the tensile armour in order to access the inner sealing layer in order to subsequently seal the same.

Over the years, those skilled in the art have noted that most of the problems related to flexible risers occur precisely in the vicinity of the end fitting, which is the critical region of the structure where the tensile stresses on the collection and production line are greatest.

Experience of dissection of end fittings for risers which have been in operation, or which have been subjected to evaluation tests, show that there is a critical section as regards faults in risers inside the end fitting, and this is precisely the section in which the tensile armour undergoes plastic deformation during the process of assembling the end fitting, or fitting the end fitting to the riser.

The existence of a section predominantly associated with failure is principally because, although the riser undergoes rigid quality control during manufacture, the end fitting is assembled and fitted to the riser manually by an assembler in the factory or on board a ship.

As currently designed by the manufacturers, in the process of assembling an end fitting the assembler needs to bend ("pull away") the wire of the tensile armour so as to be able to reach the layers further inside the pipe and seal the inner layer, and then bond the steel wire, both in the same region of the end fitting.

This forcible bending of the wire of the tensile armour causes plastic deformation of the steel of the wire, inducing considerable residual tension in the armour. Plastic deformation and the geometrical discontinuities caused by reassembling the armour to inject the resin occur precisely in the section of the armour of which most is demanded: close to the opening of the end fitting, at the beginning of the resin region, where this whole process of bending and unbending the tensile armour, together with the concentration of tension that occurs in this region, accelerates the process of fatigue in the wire.

The problems outlined above are described in various documents in the specialist technical literature. Document US 6,273,142, published 14.08.2001, relates to a flexible pipe with an end fitting; document US 6,923,477, published 02.08.2005, relates to a terminal end fitting for multilayer flexible pipes with an internal seal; and document US 6,592,153, published 15.07.2003, describes a terminal end fitting for flexible pipes; document PI 0704349-2, published 05.05.2009, relates to an end fitting for flexible pipes; and document PI 0703202-1, published 28.04.2009, relates to a terminal for a flexible riser with a conical fitting. These are all examples of the various different models of end fittings currently on the market, which invariably require that the steel armour layer be bended in order to carry out the appropriate internal sealing and to complete the assembly thereof.

GB 2439146 A discloses a pipe end fitting in which a length of tensile armour layers is located in a cavity in the end fitting in which a wire will be terminated. This cavity is filled with epoxy in order to lock the wires in position. A further example can be found in the document US2009160184 A1 which is considered the closest prior art.

The present invention has been developed so as to at least partly alleviate at least one of the problems mentioned above. More particularly it is desirable to be able to carry out assembly on the flexible riser at the end fitting without submitting the tensile armour to plastic deformation.

To this end we have developed an end fitting for a riser and a method for fitting an end fitting to a riser without deforming the armour, which is an aim of the present invention. Aims of the present invention include to simplify the assembly procedure, to improve the precision of adhesion between the end fitting and the riser, to eliminate residual plastic tension, and also to maintain the original geometry of the wire armour of the flexible risers in the vicinity of the opening of the end fitting.

It also an aim of the present invention to provide a novel concept of connection, which can be adopted as the base for new designs.

Other aims of the present invention are enumerated below:
1. to enable an increase in the service life of the ends of flexible risers;
2. to make it possible to use flexible risers in deeper waters;
3. to simplify considerably the assembly procedure;
4. to improve significantly the structural performance of the flexible riser especially as regards increasing its fatigue life.

### SUMMARY OF THE INVENTION

According to the present invention there is provided an end fitting as defined in claim 1.

Optionally, the sealing zone is axially spaced from the free ends of the tensile armour.

Optionally, the zone of adhesion is in a portion in which the tensile armour is not subject to any type of plastic deformation and/or alteration in the composition of its strands and/or modifications in the microstructural properties of the steel of which the tensile armour is formed.

Optionally, the zone of adhesion is in a portion in which strands of the tensile armour are not subject to any type of alteration of angle relative to the axis of the riser.

According to a further aspect of the present invention there is provided a method for fitting an end fitting to a riser, as defined in claim 8.

Optionally, the filling step is carried out before sealing and securing said polymeric pressure layer.

Optionally, a sealing zone at which the polymeric pressure layer is sealed is axially spaced from the free ends of the tensile armour.

Optionally, sealing said polymeric pressure layer comprises:
positioning the sealing means, which comprises a frontal seal ring in the form of a wedge on
   the polymeric pressure layer; and
fitting an activation flange.

Optionally, the method is caried out with the tensile armour not being subject to any type of plastic deformation and/or alteration in the composition of its strands and/or modifications in the microstructural properties of the steel of which the tensile armour is formed.

In an embodiment the present invention pertains to an end fitting, for the flexible riser, that may be constituted by three distinct parts, namely: a core, an outer casing, and a termination.

The core may be composed of a predominantly cylindrical piece provided at one of its ends with a main flange, with the other end thereof having a conical shape. The conical end may have a diameter large enough for the core, when directed against the riser, to fit between the pressure armour and the two superimposed layers of tensile armour of said riser. The main flange, at the end of the core, may be provided with an inner chamfer which accommodates a frontal seal ring in the form of a wedge, with an activation flange superimposed thereon.

A supporting flange may be provided close to the main flange of said core, so as to be able to shield the free ends of the two superimposed layers of tensile armour within the limit of the inside diameter of a cylindrical outer casing.

The outer casing may comprise a substantially cylindrical piece which has a constant outside diameter, with one end thereof fixed to the main flange, the size of which is equivalent to the inside diameter thereof. The free end of the cylindrical outer casing may be provided with an inner chamfer which accommodates a rear seal ring in the form of a wedge, also with an activation flange superimposed thereon. Inside, between the cylindrical outer casing and the conical portion of the core, a chamber is formed, which can be filled with resin.

Finally, the termination may be fixed to the main flange of the core.

In an embodiment, the disclosure pertains to a method, an aim of which is to ensure that the device is assembled on the risers, without deforming the tensile armour of the same. More specifically the method may comprise the following steps:
- cutting the outer covering of a riser so that the layers of tensile armour are exposed for a length sufficient for anchoring the same;
- positioning the core of the end fitting under the layers of tensile armour;
- fitting the free ends of the layers of tensile armour; into the supporting flange so that they are shielded on the body of the core, and within the limit of the inside diameter of a cylindrical outer casing;
- fixing the cylindrical outer casing to the core;
- securing the outer covering by fitting a first activation flange;
- sealing and securing the inner sealing layer, by fitting a second activation flange;
- fixing the termination to the main flange of the core;
- filling resin into the chamber where the tensile armour is anchored to the body of the end fitting.

In an embodiment, the disclosure pertains to an end fitting for a flexible riser for linking Stationary Production Units (SPUs) to oil wells, wherein said end fitting for a flexible riser includes a termination, a core and an outer casing wherein:
- the core is constituted by a predominantly cylindrical piece provided in one of the ends thereof with a flange and a support flange with the other end thereof having a conical shape;
- the conical end has a diameter sufficient for said core, when directed against the riser, to fit between the pressure armour of said riser and the two superimposed layers of tensile armour;
- the flange at the end of the core is provided with an internal chamfer, which accommodates a frontal seal ring in the form of a wedge, with an activation flange superimposed thereon;
- the support flange is provided close to the flange of said core, so as to be able to shield the free ends of the two superimposed layers of tensile armour within the limit of the inside diameter of a cylindrical outer casing;
- the cylindrical outer casing has a constant external diameter, with one of the ends thereof fixed to the flange the size of which is equivalent to the internal diameter thereof; inside, the diameter of the cylindrical outer casing is constant from the end thereof fixed to said flange to close to the beginning of the conical portion of the core when the diameter gets smaller in parallel with
   the conical shape of said portion of the core, but being longer, until the inside diameter reaches the outer covering of the riser;
- an expansion ring to shield and separate the outer covering of the riser of the superimposed layers of tensile armour;
- the free end of the cylindrical outer casing is provided with an internal chamfer, which accommodates a posterior seal ring in the form of a wedge, with a second activation flange superimposed thereon;
- inside, between the cylindrical outer casing and the conical portion of the core, a chamber is formed, which is filled with resin;
- the termination is fixed to the flange of the core.

Optionally, the zone of sealing of the inner polymeric pressure layer and the zone of adhesion and anchoring of the tensile armour are situated at different and independent points in the end fitting.

The inner seal is effected by a seal ring and an activation flange which act against the body of the termination.

Optionally, the
core is constituted by two independent members fitted together by some fitting means, with one of the pieces being the anterior core , constituted by a section provided with the flange and the other piece, the posterior core, constituted by a section provided with a conical wedge shaped end.

Optionally, the zone of adhesion is in a portion in which the tensile armour is not subject to any type of plastic deformation or alteration in the composition of its strands.

Optionally, the zone of adhesion is in a portion in which the strands of the tensile armour are not subject to any type of alteration of angle relative to the axis of the riser.

Optionally, the zone of adhesion is in a portion in which the tensile armour is not subject to modifications in the microstructural properties of the steel.

In an ebodiment, the disclosure pertains to a method of assembly without deforming the armour of the end fitting for a flexible riser according to the first aspect, wherein it includes the following steps:
1) cutting the outer covering of the riser so that the layers of tensile armour
   are exposed for a length sufficient for anchoring the same;
2) placing an expansion ring under the outer covering;
3) positioning the core of the end fitting under the layers of tensile armour;
4) fixing the support flange of the wire, preferably by means of screws, to the flange of the core;
5) fitting the free ends of the layers of tensile armour into the support flange, such that they are shielded on the body of the core , and within the limit of the inside diameter of a cylindrical outer casing;
6) fixing the cylindrical outer casing to the core;
7) positioning the posterior seal ring in the form of a wedge behind the cylindrical outer casing, and then securing the outer covering, by fitting a second activation flange;
8) positioning the frontal seal ring in the form of a wedge on the polymeric pressure layer , and then sealing and securing said layer, by fitting the first activation flange;
9) fitting the termination to the flange of the core;
10) filling with resin the chamber, where the tensile armour and is already positioned.

Optionally, the tenth and last step can be carried out soon after the seventh step.

Optionally, the cylindrical outer casing is fixed to the core preferably by means of a screw thread.

Optionally, the cylindrical outer casing is fixed to the core by means of a flange.

Optionally, the frontal seal ring in the form of a wedge is positioned on the polymeric pressure layer and that sealing and securing of said layer is effected by fitting the first activation flange, preferably by means of screws, to the top of the flange of the core.

Optionally,the termination is fixed to the flange of the core, preferably by means of screws.

### BRIEF DESCRIPTION OF THE DRAWINGS

The present disclosure will be described by way of example, with reference to the accompanying drawings, in which:
Figure 1 is a cross-sectional view of an end fitting of the prior art;
Figure 2 is a cross-sectional view of the end fitting of the present invention; and
Figure 3 is a cross-sectional view of an alternative embodiment of the present disclosure.

### DETAILED DESCRIPTION

The end fitting for a flexible riser and method of assembly without deforming the armour, which are the subject of the present disclosure, have been developed from studies primarily intended to reduce or eliminate residual tensions and modification of the microstructural properties of steel produced during the current procedure for connecting the end fitting and the tensile armour of a flexible riser.

The present disclosure provides means for altering the assembly procedure in relation to that currently employed, eliminating the need to bend the wire of the armour.

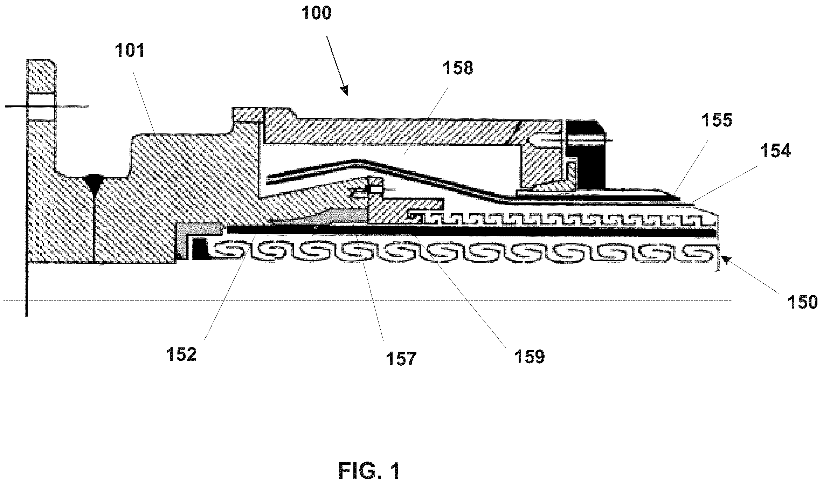

As can be seen from Figure 1 this shows in schematic cross-section how the six basic layers of a riser (150) are fixed by adhesion to a standard type of end fitting (100), in accordance with the prior art.

In one way or another the end fittings (100) in the prior art always show a main termination (101) in which the polymeric pressure layer (152) is sealed by the inner seal ring (157) and the anterior seal activation flange (159). The inner (154) and outer (155) layer of armour of the riser (150) are adhered by means of the resin in the chamber (158), the opening of which is close to and directed in the same sense as the body of said main termination (101).

Thus, this standard structure entails bending the layers of tensile armour (154) and (155), usually known as the wire of the tensile armour, backwards during the assembly procedure, so that the assembler can reach the polymeric pressure layer (152) and position the inner seal ring (157) and then fix the anterior seal activation flange (159). Subsequently, the layers of tensile armour (154) and (155) are unbent, so that these can be adhered inside the chamber (158), by injecting resin, in the outermost section of the riser (150) .

The end fitting (200) for a flexible riser and method of assembly without deforming the armour, proposed herein, have been developed from the basic configuration of the end fittings (100) currently on the market, but use a novel approach of fitting the riser (150).

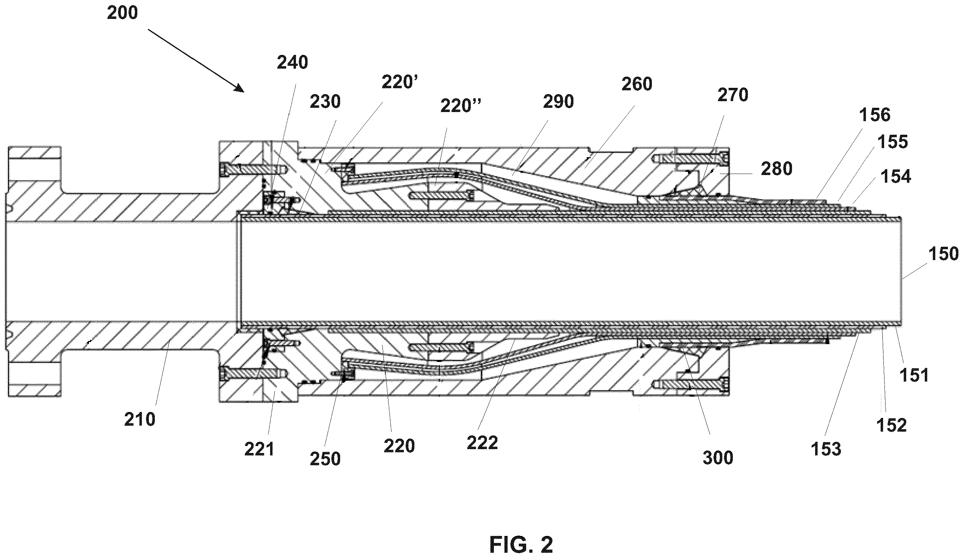

As can be seen in Figure 2, in this novel inventive concept, the main body of the end fitting (200) is constituted by three distinct parts, namely: a termination (210), a core (220), and an outer casing (260) .

As will be shown below, and can be readily visualized with the aid of the figures, this novel structural concept enables the assembler to adhere the inner polymeric pressure layer (152) without the need to change the direction of the layers of tensile armour (154) and (155) of the riser (150) by bending, because the sealing zone of the inner polymeric pressure layer (152) and the zone of adhesion and anchoring of the tensile armour (154) and (155) are located in different, independent, points in the end fitting (200) .

The core (220) may be constituted by a predominantly cylindrical piece provided with a flange (221) at one of the ends thereof and having a conical shape at the other end (222) thereof.

The conical end (222) may have a diameter sufficient for said core (220), when directed against the riser (150), to fit between the pressure armour (153) of said riser (150) and the two superimposed layers (154) and (155) of the tensile armour.

The core (220) is provided with a sealing means. A flange (221) at the end of the core (220) is provided with an internal chamfer, which accommodates the sealing means, which comprises a frontal seal ring (230) in the form of a wedge, which is overlaid by a first activation flange (240). When pressed by the first activation flange (240), said frontal seal ring (230) in the form of a wedge squeezes the polymeric pressure layer (152) forming an internal seal.

Optionally in order to facilitate manufacture, the core (220) can be made up of two independent pieces, fitted together by some fitting means; one of these, the anterior core (220'), being constituted by a section provided with the flange (221), and the other, the posterior core (220''), being constituted by a section provided with a wedge-shaped conical end (222).

The free ends of the tensile armour are within the limit of the inside diameter of a cylindrical outer casing (260). In an embodiment a support flange (250) is provided close to the flange (221) of said core, so as to be able to support the free ends of the two superimposed layers (154) and (155) of tensile armour within the limit of the inside diameter of a cylindrical outer casing (260).

The cylindrical outer casing (260) may have a constant outside diameter and one of the ends thereof is fixed to the flange (221), which has a size equivalent to the inside diameter thereof. Inside, the diameter of the cylindrical outer casing (260) may be constant from the end thereof fixed to said flange (221) to close to the beginning of the conical portion of the core (220), when the diameter starts to get smaller, following the conical shape of said portion of the core, but being longer, until the inside diameter reaches the outer covering (156) of the riser (150).

The outer covering (156) of the riser (150) may be shielded and separated from the other layers of the riser (150) by an expansion ring (300), which is placed between said outer covering (156) and the superimposed layers of tensile armour (154) and (155).

The free end of the cylindrical outer casing (260) may have an internal chamfer, which accommodates a posterior seal ring (270) in the form of a wedge, overlaid by a second activation flange (280), which, when pressed against the free end of said cylindrical outer casing (260), causes the posterior seal ring (270) to squeeze the outer covering (156) of the riser (150) against the expansion ring (300).

Inside, between the cylindrical outer casing (260) and the conical portion of the core (220) a chamber (290) is formed, which can be filled with epoxy resin or the like, resulting in sustaining adhesion between the end fitting (200) and the superimposed layers of tensile armour (154) and (155). This zone of adhesion may occur in a portion in which the tensile armour (154) and (155) is not subject to any type of plastic deformation or change in the composition of the strands thereof or even the angle with respect to the axis of the riser (150).

Finally, the termination (210) may be fixed to the flange (221) of the core (220), to give the final configuration of the end fitting (200).

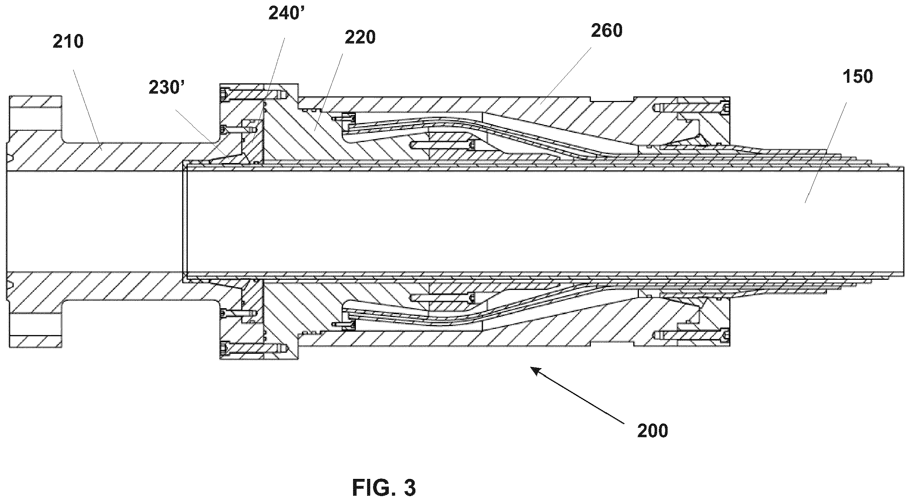

Other proposals for effecting the inner or outer seal can be presented without deviating from the inventive concept, such as, for example, the alternative embodiment presented in Figure 3, in which the inner seal is effected by a seal ring (230') and an activation flange (240') which act against the body of the termination (210).

The disclosure also pertains to a rapid method of assembly without needing to bend the layers of tensile armour of the riser.

The method will be described with reference to Figure 2, but it should be emphasized that the inventive concept described below is not restrictive, and a person skilled in the art will recognize that it is possible to alter the sequence in order to include or eliminate certain steps of the method to suit new configurations of the basic end fitting (200) shown both in Figure 2 and in Figure 3, these alterations being included within the scope of the method of the invention as defined in the claims.

In an embodiment there is provided a method for fitting an end fitting to a riser, wherein the method comprises the following steps:
fitting the end fitting to the riser without deforming tensile armour of the riser.

With the help of Figure 2 it is possible to see more specific steps for implementing the procedure for initiating the assembly of the riser (150), following the following steps:
1 - Cutting the outer covering (156) of the riser (150) so that the layers of tensile armour (154) and (155) are exposed for a length sufficient for anchoring the same;
2 - Placing an expansion ring (300) under the outer covering (156);
3 - Positioning the core (220) of the end fitting under the layers of tensile armour (154) and (155);
4 - Fixing the support flange (250) of the wire, preferably by means of screws, to the flange (221) of the core;
5 - Fitting the free ends of the layers of tensile armour (154) and (155) into the support flange (250) so that they are shielded on the body of the core (220), and within the limit of the inside diameter of a cylindrical outer casing (260);
6 - Fixing the cylindrical outer casing (260) to the core (220), preferably by a screw thread, but which can also be by means of a flange;
7 - Positioning the posterior seal ring (270) in the form of a wedge behind the cylindrical outer casing (260), and then securing the outer covering (156), by means of fitting an activation flange (280);
8 - Positioning the frontal seal ring (230) on the polymeric pressure layer (152), in the form of a wedge and sealing and securing said layer (152), by fitting an activation flange (240), preferably by means of screws, to the top of the flange (221) of the core (220) ;
9 - Fixing the termination (210) to the flange (221) of the core (220), preferably by means of screws;
10 - Filling with resin the chamber (290), where the tensile armour (154) and (155) is anchored to the body of the end fitting (200).

Alternatively, this last step can be carried out shortly after the seventh step.

It can be easily appreciated that the current invention not only eliminates the need to bend the tensile armour of the riser, but more especially it also makes the assembly procedure much more simple and rapid.

However, one of the main factors which makes the present proposal feasible is not limited to ease of assembly, but above all to eliminating residual plastic tension left during assembly using available end fittings according to the prior art.

Thus, one of the unquestionable advantages of the proposed invention is, therefore, to raise the reliability of the connection and establish new parameters for operational stresses in flexible risers, in order to ensure lower levels of failure.

The invention has been described here with reference to preferred embodiments thereof. However, it should be clear that the invention is not restricted to these embodiments, and those skilled in the art will immediately perceive which alterations and substitutions can be adopted without deviating from the scope of the claims.

## Claims

1. An end fitting for a flexible riser, wherein said end fitting (200) for a flexible riser includes a termination (210), a core (220) and an outer casing (260) wherein:
- the core (220) is provided with a sealing means;
- the outer casing (260) is configured such that free ends of tensile armour (154, 155) of said riser (150) can be within the limit of the inside diameter of the outer casing (260); and
- between the outer casing (260) and the core (220), a chamber (290) is formed, which can be filled with resin;
**characterised in that** a flange (221) at the end of the core (220) is connected to a flange of the termination (210), and is further provided with an internal chamfer, which accommodates the sealing means, which comprises a frontal seal ring (230) in the form of a wedge, which is overlaid by a first activation flange (240), wherein the frontal seal ring (230) and the activation flange (240) act against a body of the core (220).

2. The end fitting for a flexible riser according to Claim 1, wherein:
at a sealing zone the sealing means comprising said frontal seal ring (230) is configured to squeeze a polymeric pressure layer (152) of said riser (150); and
the chamber (290) comprises a zone of adhesion of the tensile armour (154, 155);
wherein the sealing zone and the zone of adhesion are situated at different and independent points in the end fitting (200).

3. The end fitting for a flexible riser according to Claim 2, wherein the sealing zone is axially spaced from the zone of adhesion.

4. The end fitting for a flexible riser according to Claim 2 or 3, comprising said flexible riser.

5. The end fitting for a flexible riser according to Claim 4, wherein the sealing zone is axially spaced from the free ends of the tensile armour (154, 155) .

6. The end fitting for a flexible riser according to any of Claims 2 to 5, wherein the zone of adhesion is in a portion in which the tensile armour (154, 155) is not subject to any type of plastic deformation and/or alteration in the composition of its strands and/or modifications in the microstructural properties of the steel of which the tensile armour (154, 155) is formed.

7. The end fitting for a flexible riser according to any of Claims 2 to 6, wherein the zone of adhesion is in a portion in which strands of the tensile armour (154, 155) are not subject to any type of alteration of angle relative to the axis of the riser (150).

8. A method for fitting the end fitting of any preceding Claim to a riser, wherein the method comprises the following step:
fitting the end fitting to the riser without plastic deformation of the tensile armour (154, 155) of the riser.

9. The method for fitting an end fitting to a riser, according to Claim 8, wherein the method comprises the following steps:
fitting the free ends of the tensile armour (154, 155) such that they are within the limit of the inside diameter of a cylindrical outer casing (260) of the end fitting (200);
positioning a sealing means on a polymeric pressure layer (152) of said riser (150), and then sealing and securing said polymeric pressure layer (152); and
filling with resin the chamber (290), where the free ends of the tensile armour (154, 155) are positioned.

10. The method for fitting an end fitting to a riser, according to Claim 9, wherein the filling step is carried out before sealing and securing said polymeric pressure layer (152).

11. The method for fitting an end fitting to a riser, according to Claim 9 or 10, wherein a sealing zone at which the polymeric pressure layer (152) is sealed is axially spaced from the chamber (290).

12. The method for fitting an end fitting to a riser, according to any of Claims 9 to 11, wherein a sealing zone at which the polymeric pressure layer (152) is sealed is axially spaced from the free ends of the tensile armour (154, 155).

13. The method for fitting an end fitting to a riser, according to any of Claims 9 to 12, wherein sealing said polymeric pressure layer (152) comprises:
positioning the sealing means, which comprises the frontal seal ring (230) in the form of a wedge on the polymeric pressure layer (152); and
fitting the activation flange (240).

14. The method for fitting an end fitting to a riser, according to any of Claims 9 to 13, wherein the method is caried out with the tensile armour (154, 155) not being subject to any type of plastic deformation and/or alteration in the composition of its strands and/or modifications in the microstructural properties of the steel of which the tensile armour (154, 155) is formed.

## Patentansprüche

1. Anschlussstück für ein flexibles Steigrohr, wobei das Anschlussstück (200) für ein flexibles Steigrohr einen Abschluss (210), einen Kern (220) und ein Außengehäuse (260) beinhaltet, wobei:
- der Kern (220) mit einem Dichtungsmittel bereitgestellt ist;
- das Außengehäuse (260) so konfiguriert ist, dass freie Enden der Zugbewehrung (154, 155) des Steigrohrs (150) innerhalb der Grenze des Innendurchmessers des Außengehäuses (260) sein kann; und
- zwischen dem Außengehäuse (260) und dem Kern (220) eine Kammer (290) gebildet ist, die mit Harz gefüllt werden kann;
**dadurch gekennzeichnet, dass** ein Flansch (221) am Ende des Kerns (220) mit einem Flansch des Abschlusses (210) verbunden ist und ferner mit einer Innenfase bereitgestellt ist, die das Dichtungsmittel aufnimmt, das einen frontalen Dichtring (230) in der Form eines Keils umfasst, der von einem ersten Aktivierungsflansch (240) überdeckt ist, wobei der frontale Dichtring (230) und der Aktivierungsflansch (240) gegen einen Körper des Kerns (220) wirken.

2. Anschlussstück für ein flexibles Steigrohr nach Anspruch 1, wobei:
das Dichtungsmittel, umfassend den frontalen Dichtring (230), in einer Dichtungszone konfiguriert ist, eine Polymerdruckschicht (152) des Steigrohrs (150) zu zusammenzudrücken; und
die Kammer (290) eine Haftungszone der Zugbewehrung (154, 155) umfasst;
wobei die Dichtungszone und die Haftungszone an unterschiedlichen und unabhängigen Punkten in dem Anschlussstück (200) angeordnet sind.

3. Anschlussstück für ein flexibles Steigrohr nach Anspruch 2, wobei die Dichtungszone axial von der Haftungszone beabstandet ist.

4. Anschlussstück für ein flexibles Steigrohr nach Anspruch 2 oder 3, umfassend das flexible Steigrohr.

5. Anschlussstück für ein flexibles Steigrohr nach Anspruch 4, wobei die Dichtungszone axial von den freien Enden der Zugbewehrung (154, 155) beabstandet ist.

6. Anschlussstück für ein flexibles Steigrohr nach einem der Ansprüche 2 bis 5, wobei die Haftungszone in einem Abschnitt ist, in dem die Zugbewehrung (154, 155) keiner Art der Kunststoffverformung und/oder Veränderung in der Zusammensetzung ihrer Stränge und/oder Modifikationen in den mikrostrukturellen Eigenschaften des Stahls, aus dem die Zugbewehrung (154, 155) gebildet ist, unterliegt.

7. Anschlussstück für ein flexibles Steigrohr nach einem der Ansprüche 2 bis 6, wobei die Haftungszone in einem Abschnitt ist, in dem Stränge der Zugbewehrung (154, 155) keiner Art der Winkelveränderung relativ zur Achse des Steigrohrs (150) unterliegen.

8. Verfahren zum Anbringen des Anschlussstücks nach einem der vorhergehenden Ansprüche an einem Steigrohr, wobei das Verfahren den folgenden Schritt umfasst:
Anbringen des Anschlussstücks an dem Steigrohr ohne Kunststoffverformung der Zugbewehrung (154, 155) des Steigrohrs.

9. Verfahren zum Anbringen eines Anschlussstücks an einem Steigrohr nach Anspruch 8, wobei das Verfahren die folgenden Schritte umfasst:
Anbringen der freien Enden der Zugbewehrung (154, 155), sodass sie innerhalb der Grenze des Innendurchmessers eines zylindrischen Außengehäuses (260) des Anschlussstücks (200) sind;
Positionieren eines Dichtungsmittels an einer Polymerdruckschicht (152) des Steigrohrs (150) und dann Abdichten und Befestigen der Polymerdruckschicht (152); und
Füllen der Kammer (290) mit Harz, wo die freien Enden der Zugbewehrung (154, 155) positioniert sind.

10. Verfahren zum Anbringen eines Anschlussstücks an einem Steigrohr nach Anspruch 9, wobei der Füllschritt ausgeführt wird, bevor die Polymerdruckschicht (152) abgedichtet und befestigt wird.

11. Verfahren zum Anbringen eines Anschlussstücks an einem Steigrohr nach Anspruch 9 oder 10, wobei eine Dichtungszone, in der die Polymerdruckschicht (152) abgedichtet ist, axial von der Kammer (290) beabstandet ist.

12. Verfahren zum Anbringen eines Anschlussstücks an einem Steigrohr nach einem der Ansprüche 9 bis 11, wobei eine Dichtungszone, in der die Polymerdruckschicht (152) abgedichtet ist, axial von den freien Enden der Zugbewehrung (154, 155) beabstandet ist.

13. Verfahren zum Anbringen eines Anschlussstücks an einem Steigrohr nach einem der Ansprüche 9 bis 12, wobei ein Abdichten der Polymerdruckschicht (152) Folgendes umfasst:
Positionieren des Dichtungsmittels, das den frontalen Dichtring (230) in der Form eines Keils umfasst, an der Polymerdruckschicht (152); und
Anbringen des Aktivierungsflansches (240).

14. Verfahren zum Anbringen eines Anschlussstücks an einem Steigrohr nach einem der Ansprüche 9 bis 13, wobei das Verfahren mit der Zugbewehrung (154, 155) ausgeführt wird, die keiner Art der Kunststoffverformung und/oder Veränderung in der Zusammensetzung ihrer Stränge und/oder Modifikationen in den mikrostrukturellen Eigenschaften des Stahls, aus dem die Zugbewehrung (154, 155) gebildet ist, unterliegt.

## Revendications

1. Un raccord d'extrémité pour colonne montante flexible, dans lequel ledit raccord d'extrémité (200) pour une colonne montante flexible comprend une terminaison (210), un noyau (220) et une enveloppe extérieure (260) dans laquelle :
- le noyau (220) est fourni avec un moyen d'étanchéité ;
- l'enveloppe extérieure (260) est configurée de sorte que les extrémités libres de l'armure de traction (154, 155) de ladite colonne montante (150) puissent être dans la limite du diamètre intérieur de l'enveloppe extérieure (260) ; et
- entre l'enveloppe extérieure (260) et le noyau (220), une chambre (290) est formée, qui peut être remplie de résine ;
**caractérisé en ce qu'**une bride (221) à l'extrémité du noyau (220) est reliée à une bride de la terminaison (210) et est en outre munie d'un chanfrein interne, qui reçoit le moyen d'étanchéité, qui comprend un joint d'étanchéité frontal (230) sous la forme d'un coin, qui est recouvert par une première bride d'activation (240), le joint d'étanchéité frontal (230) et la bride d'activation (240) agissant contre un corps du noyau (220).

2. Raccord d'extrémité pour colonne montante flexible selon la revendication 1, dans lequel
dans une zone d'étanchéité, le moyen d'étanchéité comprenant ledit joint d'étanchéité frontal (230) est configuré pour comprimer une couche de pression polymère (152) de ladite colonne montante (150) ; et
la chambre (290) comprend une zone d'adhérence de l'armure de traction (154, 155) ;
dans lequel la zone d'étanchéité et la zone d'adhérence sont situées à des points différents et indépendants du raccord d'extrémité (200).

3. Raccord d'extrémité pour colonne montante flexible selon la revendication 2, dans lequel la zone d'étanchéité est espacée axialement à partir de la zone d'adhérence.

4. Raccord d'extrémité pour colonne montante flexible selon la revendication 2 ou 3, comprenant ladite colonne montante flexible.

5. Raccord d'extrémité pour colonne montante flexible selon la revendication 4, dans lequel la zone d'étanchéité est espacée axialement à partir des extrémités libres de l'armure de traction (154, 155).

6. Raccord d'extrémité pour colonne montante flexible selon l'une quelconque des revendications 2 à 5, dans lequel la zone d'adhérence est dans une partie dans laquelle l'armure de traction (154, 155) n'est soumise à aucun type de déformation plastique et / ou de modification dans la composition de ses brins et / ou des modifications dans les propriétés microstructurales de l'acier dont est formée l'armure de traction (154, 155).

7. Raccord d'extrémité pour colonne montante flexible selon l'une quelconque des revendications 2 à 6, dans lequel la zone d'adhérence est située dans une partie dans laquelle les brins de l'armure de traction (154, 155) ne sont soumis à aucun type de modification d'angle relatif à l'axe de la colonne montante (150).

8. Procédé de montage du raccord d'extrémité selon l'une quelconque des revendications précédentes sur une colonne montante, le procédé comprenant les étapes suivantes : montage du raccord d'extrémité sur la colonne montante sans déformation plastique de l'armure de traction (154, 155) de la colonne montante.

9. Procédé de montage d'un raccord d'extrémité sur une colonne montante, selon la revendication 8, dans lequel le procédé comprend les étapes suivantes :
- le montage des extrémités libres de l'armure de traction (154, 155) de manière à ce qu'elles soient dans la limite du diamètre intérieur d'une enveloppe extérieure cylindrique (260) du raccord d'extrémité (200) ;
le positionnement d'un moyen d'étanchéité sur une couche de pression polymère (152) de ladite colonne montante (150), puis le scellement et fixage de ladite couche de pression polymère (152) ; et
le remplissage de la chambre dans laquelle sont positionnées les extrémités libres de l'armure de traction (154, 155) avec de la résine (290).

10. Procédé de montage d'un raccord d'extrémité sur une colonne montante selon la revendication 9, dans lequel l'étape de remplissage est effectuée avant le scellement et la fixation de ladite couche de pression polymère (152).

11. Procédé de montage d'un raccord d'extrémité sur une colonne montante selon la revendication 9 ou 10, dans lequel une zone d'étanchéité dans laquelle la couche de pression polymère (152) est scellée est espacée axialement à partir de la chambre (290).

12. Procédé de montage d'un raccord d'extrémité sur une colonne montante, selon l'une quelconque des revendications 9 à 11, dans lequel une zone d'étanchéité dans laquelle la couche de pression polymère (152) est scellée est espacée axialement à partir des extrémités libres de l'armure de traction (154, 155).

13. Procédé de montage d'un raccord d'extrémité sur une colonne montante, selon l'une quelconque des revendications 9 à 12, dans lequel le scellement de ladite couche de pression polymère (152) comprend les étapes consistant à :
positionner le moyen d'étanchéité, qui comprend le joint d'étanchéité frontal (230) sous la forme d'un coin sur la couche de pression polymère (152) ; et
effectuer le montage de la bride d'activation (240).

14. Procédé de montage d'un raccord d'extrémité sur une colonne montante, selon l'une quelconque des revendications 9 à 13, dans lequel le procédé est mis en oeuvre avec l'armure de traction (154, 155) ne faisant l'objet d'aucun type de déformation plastique et / ou de modification dans la composition de ses brins et / ou des modifications dans les propriétés microstructurales de l'acier dont est formée l'armure de traction (154, 155).
